# EUROPEAN PATENT SPECIFICATION

(11) **EP 2 111 274 B1**
(45) Date of publication and mention of the grant of the patent: **24.10.2012**
(21) Application number: 08729071.4
(22) Date of filing: 05.02.2008
(51) Int. Cl.: B01D 46/40, B01D 46/00, A62B 23/02, B01D 29/01

(54) **MANUFACTURE FILTRATION ELEMENTS**
HERSTELLUNG VON FILTERUNGSELEMENTEN
ÉLÉMENTS DE FILTRATION MANUFACTURÉS

(30) Priority: 08.02.2007 US 888895 P; 07.11.2007 US 986206 P; 01.02.2008 US 24697
(43) Date of publication of application: 28.10.2009
(73) Proprietor: Invengineering Enterprises, Llc, Tucson, AZ 85757 (US)
(72) Inventor: KWOK, Kleo, Oro Valley, AZ 85755 (US)
(74) Representative: Prinz & Partner
(86) International application number: PCT/US2008/053079
(87) International publication number: WO 2008/097994

(56) References cited:
- US-A- 3 441 145
- US-A- 3 648 843
- US-A- 3 648 843
- US-A- 5 711 877
- US-A- 5 863 312
- US-A1- 2003 089 236
- US-B1- 6 414 835
- US-B2- 6 417 276

## Description

The invention relates to a method of forming a filter element of a sheet of etchable material having a first surface and a second surface by selectively etching channels of predetermined size. More generally, the invention relates to the manufacture of filters. The invention has particular utility with reference to the manufacture of reusable filter elements, and will be described in connection with such utility, although other utilities are contemplated.

There are many methods in existence to manufacture filtration elements for various applications. Examples include etched disc, pleated materials, mesh screen, folded paper, etc.

US-A-5,711, 877 describes etching orthogonal flow channels into each side of a disc to create flow passages where the channels intersect. Individual discs having a thickness of about 30 microns each are then stacked in a way to require fluid to weave through the flow channels in order to reach the next stacked disc. Because it is impracticable to work with a foil thickness of less than about 25 microns, the minimum micron rating possible is about 20 microns. Because the flow channels on each side of the disc are orthogonal to each other, the flow passage at which the channels intersect is substantially a square having side dimensions of the full width of the etched channels, described as about 550 microns. Because the flow passage size is so large, it is impracticable to use a single sheet or disc of Gonzalez as a filter, and impossible to achieve micron ratings below 20 microns. This is contrasted with the size of an average dust particle having a diameter of about 1-100 microns, and bacteria ranging from 0.5 - 15 microns.

The present invention provides improvement over the prior art methods. According to the invention, the method as defined in the preamble of claim 1 is characterized by the steps of:
masking the first and second surfaces of the sheet and etching the sheet from both sides as follows:
   etching at least one channel in a first direction into the first surface of the sheet;
   etching at least one channel offset to the at least one channel in the first direction and substantially parallel to at least one channel in the first direction into the second surface of the sheet of etchable material such that the at least one channel in the first direction on the first surface and the at least one channel substantially parallel to the plurality of channels of on the second surface at least partially overlap, such that through channels of predetermined size are formed.

In one aspect the present invention employs photochemical etching techniques to manufacture a basic filtration element, which can then be used as a basis for constructing various devices for different applications. In this process, sheets of etchable material are etched from both sides of that sheet to form channels in a premasked pattern, which controls the minimum opening of the filtration element. The desired channel opening is only limited by the capability of the photochemical etching system being used.

Other features and advantages of the present invention will be seen from the following detailed description, taken into conjunction with the accompanying drawings, wherein;

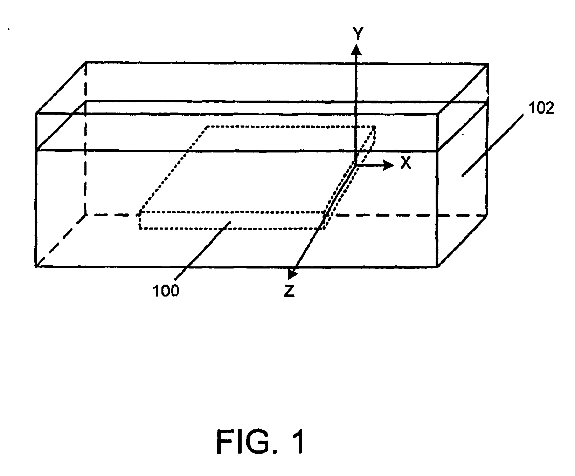

Fig. 1 grammatically illustrates an etching bath for forming a basic filtration element in accordance with the present invention;
Figs. 2 and 3 illustrate etching patterns for a filtration element made in accordance with the present invention;
Fig. 4, 4A and 4B illustrate one embodiment of a filter made in accordance with the present invention;
Fig. 5 illustrates how a filtration element made in accordance with the first embodiment of the present invention may be folded or pleated to increase the filtration area;
Fig. 7 shows how a basic filtering element of the present invention may be used to form a face mask.

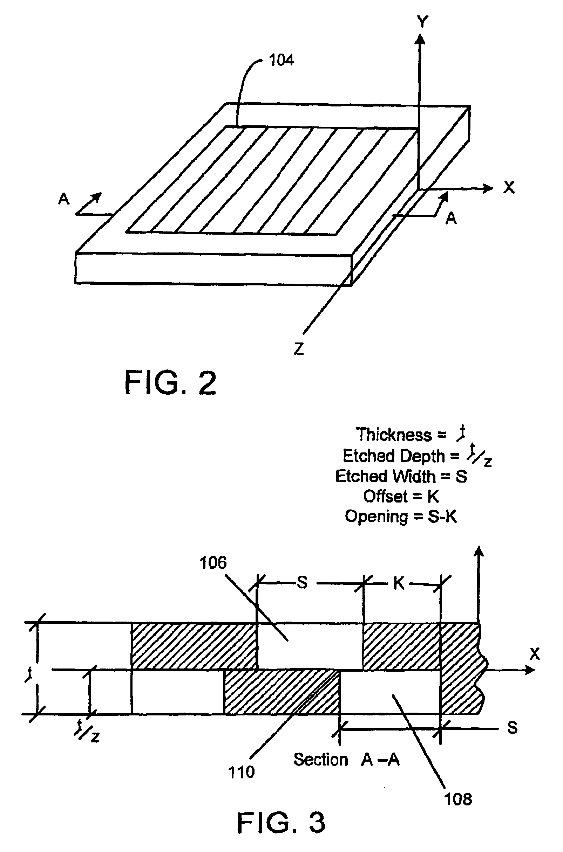

In one preferred embodiment of the invention, a metal sheet 100 is immersed in an etching bath 102, and relative movement is established between the sheet and the bath, e.g. by moving the sheet back and forth in the bath, for example, with X being the direction of the sheet movement in the etching bath and Y being the thickness direction, the sheet of material is masked 104 and etched in the Y direction as depicted in Fig. 2. Alternatively, the etch bath may be caused to flow over the sheet, or sprayed onto the sheet. The etch bath etches the sheet into etched patterned channels or openings 106, 108 (Fig. 3) to a depth which in a preferred embodiment of the invention is just past half of the sheet thickness, as measured from both sides of the sheet. The etched channels on one side are 106 offset from the etched channels 108 on other side so that when the sheet is etched from each side to a depth just past half the sheet thickness, the channels will meet with a predetermined width opening 110. An exemplary pattern and the opening width is shown in Figs. 2 and 3. The etched depth is controlled by the etchant flow, temperature, exposure time, etchant concentration, etc. This pattern is repeated in the X direction.

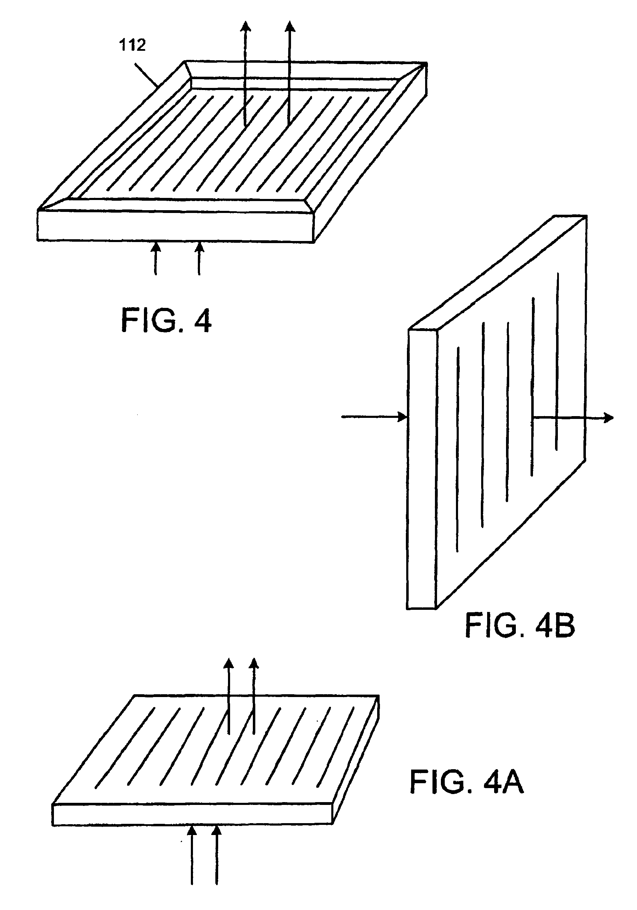

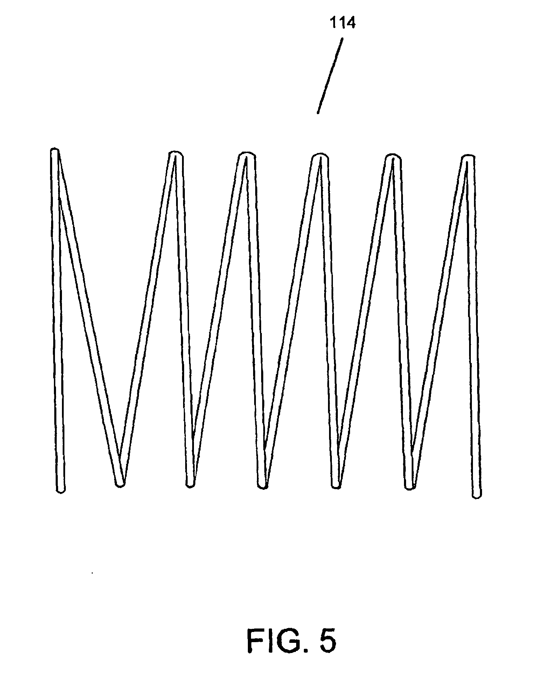

Once the basic filtration element in sheet form is obtained, further processing can be performed depending on the required application. For example, the etched sheet maybe cut into rectangular shape. With proper edge support 112 (see Fig. 4), it can be used as a filter as shown in Figs. 4A and 4B, with fluid flows in the direction normal to the plate of this filter. Such an arrangement can be used as an air filter, or a household screen. This rectangular geometry can be folded or pleated, e.g. as shown at 114 in Fig. 5 to increase the filtration area.

The filtration element also can be used as an environmental separator that allows gas, including air, to flow through but inhibits the passing of liquid, such as water due to capillary effects.

The filtration element also can be used as a filter for a FTVAC. For example, by placing the filter horizontally in a ceiling vent, heat will escape through the ceiling due to convective air flow, thus lowering the temperature of the living space. And yet it will prevent dust particles that are larger than the largest opening of the filter from recirculating into the living space.

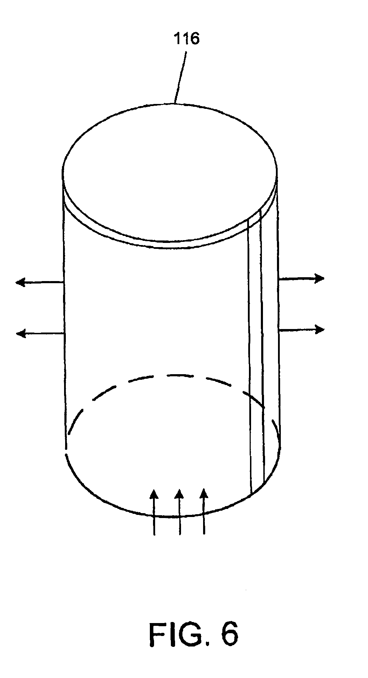

In another embodiment, shown in Fig. 6, the basic sheet can be cut into size, wrapped to form a cylinder, the two edges mated together, and one end of the cylinder capped at 1 16. The resulting structure can then be used as a cartridge filter. Fluid can flow from the open end through the etched channel openings and out radially as shown in Fig.6. Particles larger in size than the maximum opening will be captured by the filtration element and retained inside the filter. Applications include, but not limited to, oil, gas and chemical filtering. Furthermore, this cylindrical shape can be folded to increase the filtration area and hence its efficiency and useful life.

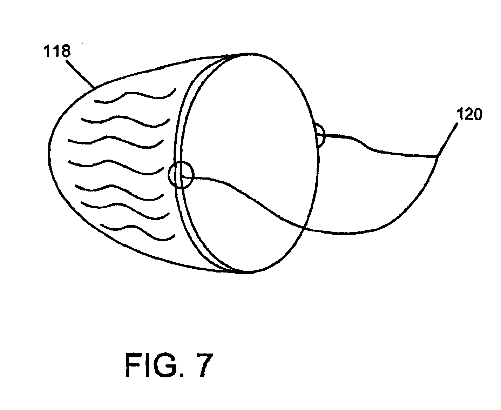

In another embodiment of the invention, the etched sheet can be formed into a face mask 118 by shaping the etched sheet into a semispherical or similar shape, as shown in Fig. 7. The edge of this semispherical shape can be bonded with flexible material (such as rubber or plastic), and a stretchable strap 120 attached to two side edges. Such a device can be used as a breathing apparatus by stretching the strap over the face of human or animal. The flexible edge conforms to the fact of the human or animal and acts as a sealing boundary to prevent particles larger than the maximum opening of the filtration element getting to the breathed air stream.

With the use of photochemical etching technique to make a filtration element, several benefits are realized.
1. The processed and formed filters can be manufactured to a high precision with openings only limited by the capability of the etching system employed.
2. With the etching process, various materials are available depending on the application's requirements.
3. The filtration element can be cleaned depending on the application and become reusable, thus reducing environmental wastes and concerns.

While the above embodiment of the invention has been described in connection with certain preferred embodiments, various changes may be made in the invention . For example, while it is preferred to etch the filter element from both sides to a depth just past half of the thickness of the sheet, other relative depths are possible.

And, while it is preferred to etch similar patterns on sides of the filter element, for certain applications such as in a ceiling vent, it may be preferred to etch different size channels on the two sides.

If desired, various filter elements having different size channels may be stacked to form a filter that separates particles by size. Also, by controlling etching, it is possible to control the shape of the channels, e.g. so that they taper.

## Claims

1. A method of forming a filter element of a sheet of etchable material (100) having a first surface and a second surface by selectively etching channels (106, 108) of predetermined size **characterized by** the steps of:
masking the first and second surfaces of the sheet and etching the sheet from both sides as follows:
etching at least one channel (106) in a first direction into the first surface of the sheet;
etching at least one channel (108) offset to the at least one channel in the first direction (106) and substantially parallel to at least one channel in the first direction (106) into the second surface of the sheet of etchable material (100) such that the at least one channel in the first direction on the first surface (106) and the at least one channel substantially parallel to the plurality of channels of on the second surface (108) at least partially overlap such that through channels of predetermined size (110) are formed.

2. The method of claim 1, **characterized by** including the step of forming the etched sheet into a cylindrical or semi-spherical shape.

3. The method of claim 1, **characterized by** including the step of fixing a reinforcing element (112) to one or more edges of the etched sheet.

4. The method of claim 1, **characterized in that** the sheet comprises a metal sheet.

5. The method of claim 1, **characterized in that** the etching is by photochemical etching.

6. The method of claim 1, **characterized by** including the steps of providing a plurality of filter elements having different sized channels (106, 108), and stacking the filter elements to form a graded filter.

7. The method of any of claims 1-6 **characterized in that** the etched sheet is formed into a semi spherical shape, and including the step of fixing flexible material to the edge of the semi spherical shaped sheet.

8. The method of claim 7, **characterized by** including the step of fixing a stretchable strap to two side edges of the semi spherical shaped sheet.

## Patentansprüche

1. Verfahren zur Bildung eines Filterelements aus einer Platte aus ätzbarem Material (100), die eine erste Oberfläche und eine zweite Oberfläche hat, indem gezielt Kanäle (106, 108) mit vorbestimmter Größe geätzt werden, **gekennzeichnet durch** die folgenden Schritte:
die erste und die zweite Oberfläche der Platte werden abgedeckt und die Platte wird von beiden Seiten wie folgt geätzt:
wenigstens ein Kanal (106) wird in einer ersten Richtung in die erste Oberfläche der Platte geätzt,
wenigstens ein Kanal (108), der versetzt zu dem wenigstens einen Kanal in der ersten Richtung (106) und im Wesentlichen parallel zu wenigstens einem Kanal in der ersten Richtung (106) ist, wird so in die zweite Oberfläche der Platte aus ätzbarem Material (100) geätzt, dass der wenigstens eine Kanal in der ersten Richtung auf der ersten Oberfläche (106) und der wenigstens eine Kanal, der im Wesentlichen parallel zu den mehreren Kanälen der zweiten Oberfläche (108) ist, sich wenigstens teilweise so überlappen, dass Durchgangskanäle mit vorbestimmter Größe (110) gebildet werden.

2. Verfahren nach Anspruch 1, **dadurch gekennzeichnet, dass** der Schritt enthalten ist, bei dem die geätzte Platte zu einer zylindrischen oder halbkugelförmigen Gestalt geformt wird.

3. Verfahren nach Anspruch 1, **dadurch gekennzeichnet, dass** der Schritt enthalten ist, bei dem an einem Rand oder mehreren Rändern der geätzten Platte ein Verstärkungselement (112) befestigt wird.

4. Verfahren nach Anspruch 1, **dadurch gekennzeichnet, dass** die Platte eine Metallplatte umfasst.

5. Verfahren nach Anspruch 1, **dadurch gekennzeichnet, dass** das Ätzen durch photochemisches Ätzen erfolgt.

6. Verfahren nach Anspruch 1, **dadurch gekennzeichnet, dass** die Schritte enthalten sind, bei denen mehrere Filterelemente bereitgestellt werden, die unterschiedlich große Kanäle (106, 108) aufweisen, und die Filterelemente gestapelt werden, um ein abgestuftes Filter zu bilden.

7. Verfahren nach einem der Ansprüche 1 bis 6, **dadurch gekennzeichnet, dass** die geätzte Platte zu einer halbkugelförmigen Gestalt geformt wird, und mit dem Schritt, bei dem flexibles Material am Rand der in eine Halbkugelform gebrachten Platte befestigt wird.

8. Verfahren nach Anspruch 7, **dadurch gekennzeichnet, dass** der Schritt enthalten ist, bei dem ein dehnbares Band an zwei Seitenrändern der in eine Halbkugelform gebrachten Platte befestigt wird.

## Revendications

1. Procédé de réalisation d'un élément de filtration à partir d'une plaque de matière gravable (100) présentant une première surface et une deuxième surface en gravant de manière sélective des canaux (106, 108) de taille prédéterminée, **caractérisé par** les étapes suivantes :
la première et la deuxième surface de la plaque sont recouvertes, et la plaque est gravée des deux côtés de la manière suivante :
au moins un canal (106) est gravé dans une première direction dans la première surface de la plaque ;
au moins un canal (108) qui est décalé par rapport audit au moins un canal dans la première direction (106) et est sensiblement parallèle audit au moins un canal dans la première direction (106) est gravé dans la deuxième surface de la plaque de matière gravable (100) de telle façon que ledit au moins un canal dans la première direction sur la première surface (106) et ledit au moins un canal qui est sensiblement parallèle à la pluralité de canaux sur la deuxième surface (108) se chevauchent au moins partiellement de sorte que des canaux de passage de taille prédéterminée (110) soient réalisés.

2. Procédé selon la revendication 1, **caractérisé en ce qu'**il inclut l'étape dans laquelle la plaque gravée est conformée de manière à obtenir une forme cylindrique ou hémisphérique.

3. Procédé selon la revendication 1, **caractérisé en ce qu'**il inclut l'étape dans laquelle un élément de renforcement (112) est fixé sur un bord ou sur plusieurs bords de la plaque gravée.

4. Procédé selon la revendication 1, **caractérisé en ce que** la plaque comprend une plaque de métal.

5. Procédé selon la revendication 1, **caractérisé en ce que** la gravure est effectuée par gravure photochimique.

6. Procédé selon la revendication 1, **caractérisé en ce qu'**il inclut les étapes dans lesquelles il est prévu une pluralité d'éléments de filtration présentant des canaux (106, 108) de tailles différentes et les éléments de filtration sont empilés afin de former un filtre étagé.

7. Procédé selon l'une des revendications 1 à 6, **caractérisé en ce que** la plaque gravée est conformée de manière à obtenir une forme hémisphérique, et **en ce qu'**il inclut l'étape dans laquelle de la matière flexible est fixée sur le bord de la plaque conformée de manière hémisphérique.

8. Procédé selon la revendication 7, **caractérisé en ce qu'**il inclut l'étape dans laquelle une bande extensible est fixée sur deux bords latéraux de la plaque conformée de manière hémisphérique.
